# EUROPEAN PATENT SPECIFICATION

(11) **EP 4 292 009 B1**
(45) Date of publication and mention of the grant of the patent: **30.04.2025**
(21) Application number: 21716573.7
(22) Date of filing: 12.03.2021
(51) Int. Cl.: G06F 30/367, G06F 30/3315, G06F 111/08

(54) **VARIABILITY CHARACTERIZATION WITH TRUNCATED ORDERED SAMPLE SIMULATION**
VARIABILITÄTSCHARAKTERISIERUNG MIT VERKÜRZTER GEORDNETER PROBENSIMULATION
CARACTÉRISATION DE VARIABILITÉ ASSORTIE D'UNE SIMULATION D'ÉCHANTILLONS CLASSÉS TRONQUÉE

(43) Date of publication of application: 20.12.2023
(73) Proprietor: Siemens Industry Software Inc., Plano, TX 75024-6612 (US)
(72) Inventor: COOPER, James, Saskatoon, Saskatchewan S7N 4X6 (CA)
(74) Representative: Horn Kleimann Waitzhofer Schmid-Dreyer Patent- und Rechtsanwälte PartG mbB
(86) International application number: PCT/US2021/022112
(87) International publication number: WO 2022/191852

(56) References cited:
- US-A1- 2012 259 446
- US-A1- 2013 226 544
- YAO JIAN ET AL: "Importance Boundary Sampling for SRAM Yield Analysis With Multiple Failure Regions", IEEE TRANSACTIONS ON COMPUTER-AIDED DESIGN OF INTEGRATED CIRCUITS AND SYSTEMS, vol. 33, no. 3, 1 March 2014 (2014-03-01), pages 384 - 396, XP011539971, DOI: 10.1109/TCAD.2013.2292504
- "Variation-Aware Design of Custom Integrated Circuits: A Hands-on Field Guide", 26 September 2012, SPRINGER NEW YORK, article MCCONAGHY TRENT ET AL: "Chapter 4: 3-Sigma Verification and Design", pages: 65 - 114, XP055866538, DOI: 10.1007/978-1-4614-2269-3_4

## Description

### TECHNICAL FIELD

This application is generally related to electronic design automation and, more specifically, to variability characterization with truncated ordered sample simulation.

### BACKGROUND

Many designers utilize libraries of standard cells to build circuit designs for electronic devices. The standard cells in these libraries typically include descriptions of digital circuitry and their various characteristics, such as timing information, power estimation, functionality, operating conditions, or the like, which can be specified using a Liberty format. For example, the Liberty format can include lookup tables populated with timing information of the standard cells in the libraries, such as cell delays, transition times and setup and hold constraints, or the like.

Since timing and power characteristics of digital circuits can vary in manufactured electronic devices, often called on-chip variation (OCV), the standard cell descriptions can also include statistical variation information, for example, specified in a Liberty Variation Format (LVF) extension to the Liberty format, which models the impacts of manufacturing-related variation associated with on-chip variation. The designers typically utilize the statistical variation information during a Statistical Timing Analysis (STA) to account for the impact that manufacturing-related variation has on delays in timing paths of the circuit designs during functional verification.

A common technique used to characterize standard cells and generate the statistical variation information includes identifying random samples of manufacturing-related variation, for example, through Monte Carlo sampling, and then individually applying the characteristics of the random samples to the digital circuitry of the standard cell and simulating the digital circuitry of the standard cell using an analog simulator. In order to have an accurate estimate of the impact of the variation, for example, a +/- 3 sigma value, the analog simulator would have to perform approximately 10,000 simulations per measurement, which can be processing intensive and impractical to characterize the millions of different measurements in a standard cell library. For that reason, some designers elect to perform 1,000-2,000 simulations, at most, and then extrapolate the results. As the size of the electronic devices has become smaller, the extrapolated results have become less accurate causing issues with timing closure and silicon failure. Other designers have attempted to speed up the characterization process by generating models of the standard cells, which can be simulated more quickly, and then simulating the model rather than the standard cells. While this characterization approach can reduce overall simulation time, it remains processing intensive and can still consumes weeks of the development timeframe.

Document "Importance Boundary Sampling for SRAM Yield Analysis With Multiple Failure Regions" by Jian Yao et al., February 13, 2024, discloses yield analysis methods for SRAM cells combining importance sampling and boundary searching methods, including finding all likely failure regions and then, do importance sampling on these regions.

Document US 2013/226544 A1 discloses a method and a system to estimate failure rates in electric circuit designs that have performance influenced by variation, where the variation is modeled at least in part by a probability distribution, and the probability of failing specifications is significantly lower than the probability of passing.

Document "Variation-Aware Design of Custom Integrated Circuits: A Hands-On Field Guide" by McConaghy Trent et al., September 26, 2012, Chapter 4 thereof, discloses background information on efficiently designing circuits accounting for statistical process variation with target yields of two to three sigma.

### SUMMARY

The invention is defined by the enclosed claims. This application discloses a computing system implementing a design characterization tool can sample a distribution of values describing manufacturing variation for an integrated circuit described by a circuit design. The samples can be divided into training samples and characterization samples. The design characterization tool can utilize the training samples to generate a surrogate model of the circuit design, for example, by prompting simulation of the circuit design utilizing the training samples and then generating the surrogate model of the circuit design based on the results of the simulation of the circuit design with the training samples.

The design characterization tool can order the characterization samples by utilizing the surrogate model to predict outputs of the circuit design during simulation utilizing the samples. The design characterization tool can simulate the surrogate model or the circuit design utilizing the ordered samples, and stop the simulations prior to all of the samples from the distribution having been utilized in the simulations. The design characterization tool can utilize at least one of a confidence interval stopping condition or a drought stopping condition to determine when to stop the simulations. The design characterization tool can utilize results of the simulations to characterize operational variation of the circuit design to the manufacturing variation described in the distribution of the values. Embodiments of will be described below in greater detail.

### DESCRIPTION OF THE DRAWINGS

Figures 1 and 2 illustrate an example of a computer system of the type that may be used to implement various embodiments.
Figure 3 illustrates an example design characterization tool to characterize manufacturing variability using truncated ordered sample simulation that may be implemented according to various embodiments.
Figure 4 illustrates a flowchart showing an example implementation of characterizing manufacturing variability using truncated ordered sample simulation according to various examples.
Figure 5 illustrates a flowchart showing an example confidence interval stopping condition while characterizing manufacturing variability using truncated ordered sample simulation according to various examples.
Figure 6 illustrates a flowchart showing an example drought stopping condition while characterizing manufacturing variability using truncated ordered sample simulation according to various examples.

### DETAILED DESCRIPTION

### Illustrative Operating Environment

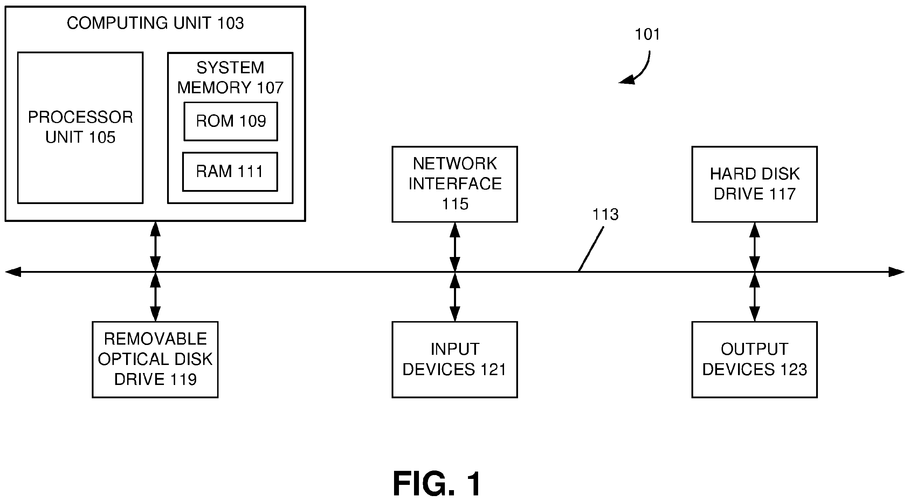

Various examples may be implemented through the execution of software instructions by a computing device 101, such as a programmable computer. Accordingly, Figure 1 shows an illustrative example of a computing device 101. As seen in this figure, the computing device 101 includes a computing unit 103 with a processor unit 105 and a system memory 107. The processor unit 105 may be any type of programmable electronic device for executing software instructions, but will conventionally be a microprocessor. The system memory 107 may include both a read-only memory (ROM) 109 and a random access memory (RAM) 111. As will be appreciated by those of ordinary skill in the art, both the read-only memory (ROM) 109 and the random access memory (RAM) 111 may store software instructions for execution by the processor unit 105.

The processor unit 105 and the system memory 107 are connected, either directly or indirectly, through a bus 113 or alternate communication structure, to one or more peripheral devices 115-123. For example, the processor unit 105 or the system memory 107 may be directly or indirectly connected to one or more additional memory storage devices, such as a hard disk drive 117, which can be magnetic and/or removable, a removable optical disk drive 119, and/or a flash memory card. The processor unit 105 and the system memory 107 also may be directly or indirectly connected to one or more input devices 121 and one or more output devices 123. The input devices 121 may include, for example, a keyboard, a pointing device (such as a mouse, touchpad, stylus, trackball, or joystick), a scanner, a camera, and a microphone. The output devices 123 may include, for example, a monitor display, a printer and speakers. With various examples of the computing device 101, one or more of the peripheral devices 115-123 may be internally housed with the computing unit 103. Alternately, one or more of the peripheral devices 115-123 may be external to the housing for the computing unit 103 and connected to the bus 113 through, for example, a Universal Serial Bus (USB) connection.

With some implementations, the computing unit 103 may be directly or indirectly connected to a network interface 115 for communicating with other devices making up a network. The network interface 115 can translate data and control signals from the computing unit 103 into network messages according to one or more communication protocols, such as the transmission control protocol (TCP) and the Internet protocol (IP). Also, the network interface 115 may employ any suitable connection agent (or combination of agents) for connecting to a network, including, for example, a wireless transceiver, a modem, or an Ethernet connection. Such network interfaces and protocols are well known in the art, and thus will not be discussed here in more detail.

It should be appreciated that the computing device 101 is illustrated as an example only, and it not intended to be limiting. Various embodiments may be implemented using one or more computing devices that include the components of the computing device 101 illustrated in Figure 1, which include only a subset of the components illustrated in Figure 1, or which include an alternate combination of components, including components that are not shown in Figure 1. For example, various embodiments may be implemented using a multi-processor computer, a plurality of single and/or multiprocessor computers arranged into a network, or some combination of both.

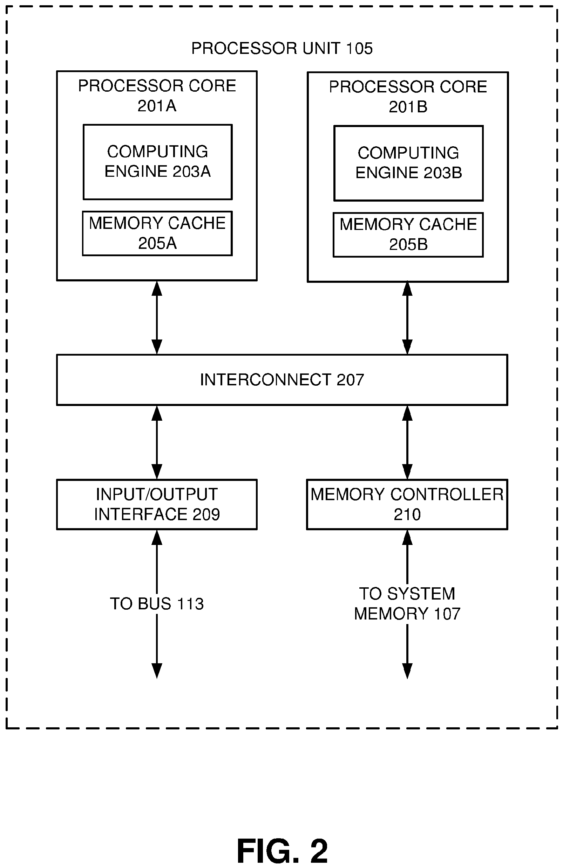

With some implementations, the processor unit 105 can have more than one processor core. Accordingly, Figure 2 illustrates an example of a multi-core processor unit 105 that may be employed with various embodiments. As seen in this figure, the processor unit 105 includes a plurality of processor cores 201A and 201B. Each processor core 201A and 201B includes a computing engine 203A and 203B, respectively, and a memory cache 205A and 205B, respectively. As known to those of ordinary skill in the art, a computing engine 203A and 203B can include logic devices for performing various computing functions, such as fetching software instructions and then performing the actions specified in the fetched instructions. These actions may include, for example, adding, subtracting, multiplying, and comparing numbers, performing logical operations such as AND, OR, NOR and XOR, and retrieving data. Each computing engine 203A and 203B may then use its corresponding memory cache 205A and 205B, respectively, to quickly store and retrieve data and/or instructions for execution.

Each processor core 201A and 201B is connected to an interconnect 207. The particular construction of the interconnect 207 may vary depending upon the architecture of the processor unit 105. With some processor cores 201A and 201B, such as the Cell microprocessor created by Sony Corporation, Toshiba Corporation and IBM Corporation, the interconnect 207 may be implemented as an interconnect bus. With other processor units 201A and 201B, however, such as the Opteron^{™} and Athlon^{™} dual-core processors available from Advanced Micro Devices of Sunnyvale, California, the interconnect 207 may be implemented as a system request interface device. In any case, the processor cores 201A and 201B communicate through the interconnect 207 with an input/output interface 209 and a memory controller 210. The input/output interface 209 provides a communication interface to the bus 113. Similarly, the memory controller 210 controls the exchange of information to the system memory 107. With some implementations, the processor unit 105 may include additional components, such as a high-level cache memory accessible shared by the processor cores 201A and 201B. It also should be appreciated that the description of the computer network illustrated in Figure 1 and Figure 2 is provided as an example only, and is not intended to suggest any limitation as to the scope of use or functionality of alternate embodiments.

### Variability Characterization with Truncated Ordered Sample Simulation

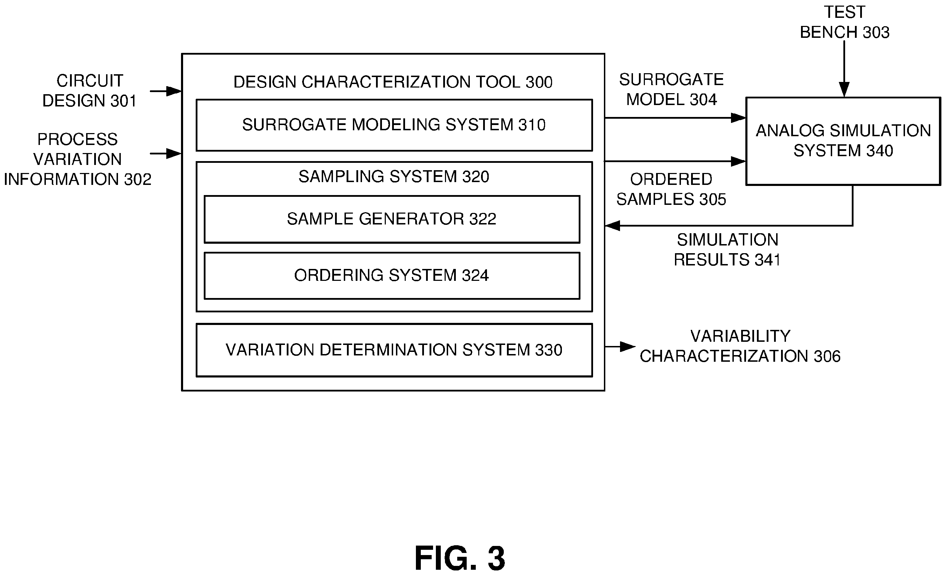

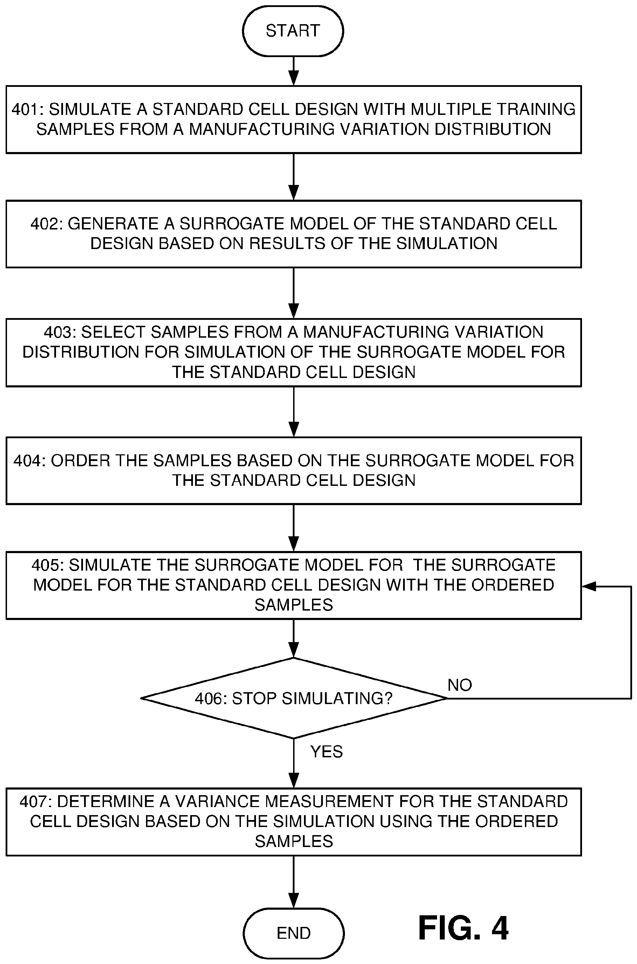

Figure 3 illustrates an example design characterization tool 300 to characterize manufacturing variability using truncated ordered sample simulation that may be implemented according to various embodiments. Figure 4 illustrates a flowchart showing an example implementation of characterizing manufacturing variability using truncated ordered sample simulation according to various examples. Referring to Figures 3 and 4, a design characterization tool 300, for example, implemented with the computing device 101 described in Figure 1, can receive a circuit design 301 describing an electronic device, such as an integrated circuit, in a transistor-level netlist format. The circuit design 301 can correspond to transistor-level netlists describing electronic circuits using metal-oxide-semiconductor (MOS) transistors, resistances, capacitors, inductances, or the like, for example, in a Simulation Program with Integrated Circuit Emphasis (SPICE) file format. In some embodiments, the circuit design 301 can be a standard cell design, for example, within a library of standard cells for the design characterization tool 300 to characterize.

The design characterization tool 300 can receive process variation information 302 describing manufacturing parameters, such as oxide thickness, oxide length, or the like, and how those parameters can vary during manufacturing. In some embodiments, the process variation information 302 can describe statistical conditions for manufacturing the circuit design 301 by defining a distribution of values for the manufacturing parameters, for example, having ranges of different potential oxide thicknesses, oxides lengths, or the like, and probabilities that a manufactured integrated circuit associated with the circuit design 301 falls at different locations in the ranges. The design characterization tool 300, in some embodiments, can receive at least a portion of the process variation information 302 from an analog simulation system 340. For example, the analog simulation system 340 can receive the circuit design 301, identify process variables, such as the manufacturing parameters, from the circuit design 301, and generate measurements for various portions of transistors in the circuit design 301. The identified process variables and the measurements can correspond to at least a portion of the process variation information 302. In some embodiments, the process variation information 302 can be specified in a SPICE file format.

The design characterization tool 300 can include a surrogate modeling system 310 to build a surrogate model 304 that approximates an output response of the circuit design 301 to variability of the manufacturing parameters described in the process variation information 302. The surrogate model 304, when simulated with different sets of manufacturing variations, can provide an output response similar to an output response of the circuit design 301 simulated with the same sets of the manufacturing variations, and the analog simulation system 340 can simulate the surrogate model 304 more quickly than the circuit design 301. In some embodiments, the surrogate model 304 can be a simple linear regression model, polynomial model, a piece-wise linear regression model, or the like.

The surrogate modeling system 310 can receive training samples of a manufacturing variation distribution, for example, from a sampling system 320. The sampling system 320 can include a sample generator 322 to sample the distribution of values for the manufacturing parameters in the process variation information 302. In some embodiments, each of the training samples can be a Monte Carlo sample randomly drawn from the distribution of values for the manufacturing parameters.

The surrogate modeling system 310 can direct the analog simulation system 340 to iteratively set the manufacturing parameters of a standard cell design, such as circuit design 301, to correspond to the different training samples and, in a block 401 of Figure 4, simulate the standard cell design set with the different training samples utilizing a test bench 303. The test bench 303 can define test stimulus, for example, clock signals, activation signals, power signals, control signals, data signals, or the like, that, when grouped, may form test bench transactions capable of prompting operation of the circuit design 301 in an analog simulation environment. In some embodiments, the test bench 303 can be written in an object-oriented programming language, for example, SystemVerilog or the like, that, when executed during elaboration, can dynamically generate test bench components for verification of the circuit design 301. A methodology library, for example, a Universal Verification Methodology (UVM) library, an Open Verification Methodology (OVM) library, an Advanced Verification Methodology (AVM) library, a Verification Methodology Manual (VMM) library, or the like, can be utilized as a base for creating the test bench 303. The surrogate modeling system 310 can generate the surrogate model 304 of the standard cell design based, at least in part, on the results of the simulation of the standard cell design set with the different training samples.

The sample generator 322, in a block 403 of Figure 4, can also select the samples from the manufacturing variation distribution for simulation of the standard cell design. In some embodiments, the sample generator 322 can sample the distribution of values for the manufacturing parameters in the process variation information 302, for example, utilizing a Monte Carlo random sampling process.

The sampling system 320 can include an ordering system 324, in a block 404 of Figure 4, to order the samples based, at least in part, on the surrogate model for the standard cell design. The ordering system 324 can compute predicted outputs by the surrogate model 304 having variations set based on the samples and utilize the predicted outputs to order the samples corresponding to the variations. For example, when manufacturing variations described in the samples have more extreme predicted output values, e.g., in one of the tails of a range of an output distribution, the ordering system 324 can order those samples ahead of other sample having less extreme predicted output values, e.g., towards the center of the range of an output distribution. By ordering the samples based on the predicted output values from the surrogate model 304, the design characterization tool 300 can direct the analog simulation system 340 to simulate the surrogate model 304 with samples of manufacturing variation more likely to generate simulation results exceeding a predetermined threshold variation, for example, +/- 3 sigma deviation.

The surrogate modeling system 310 can provide the surrogate model 304 to the analog simulation system 340 for simulation with ordered samples 305 of the manufacturing variation distribution, for example, from the sampling system 320. The design characterization tool 300 can include a variation determination system 330 to direct the analog simulation system 340, in a block 405 of Figure 4, to simulate the surrogate model 304 with the ordered samples 305 of manufacturing variation and receive back simulation results 341. In some embodiments, the variation determination system 330 can provide the analog simulation system 340 with separate combinations of the input variables from the ordered samples 305 to utilize when simulating the surrogate model 304.

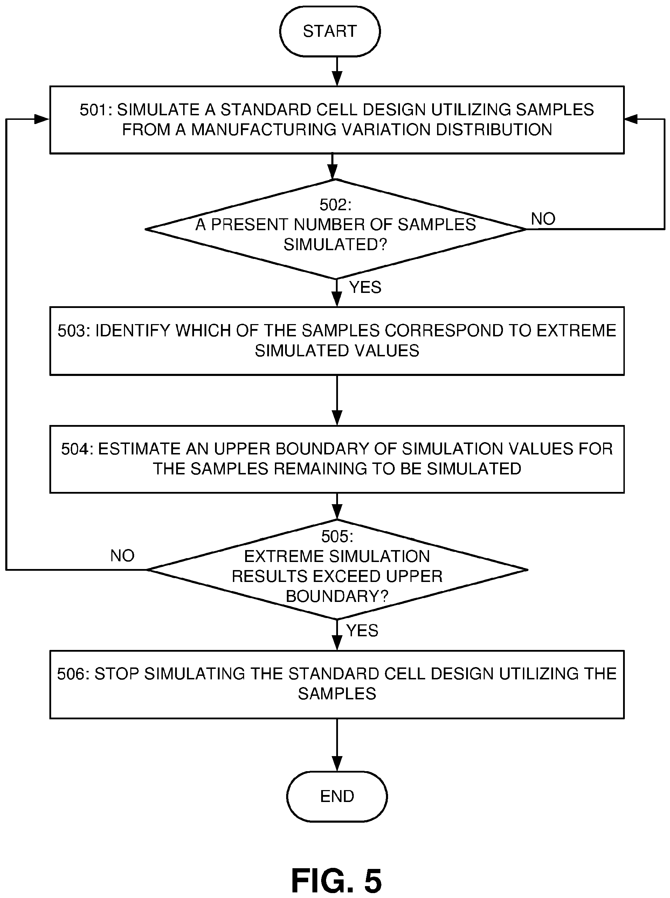

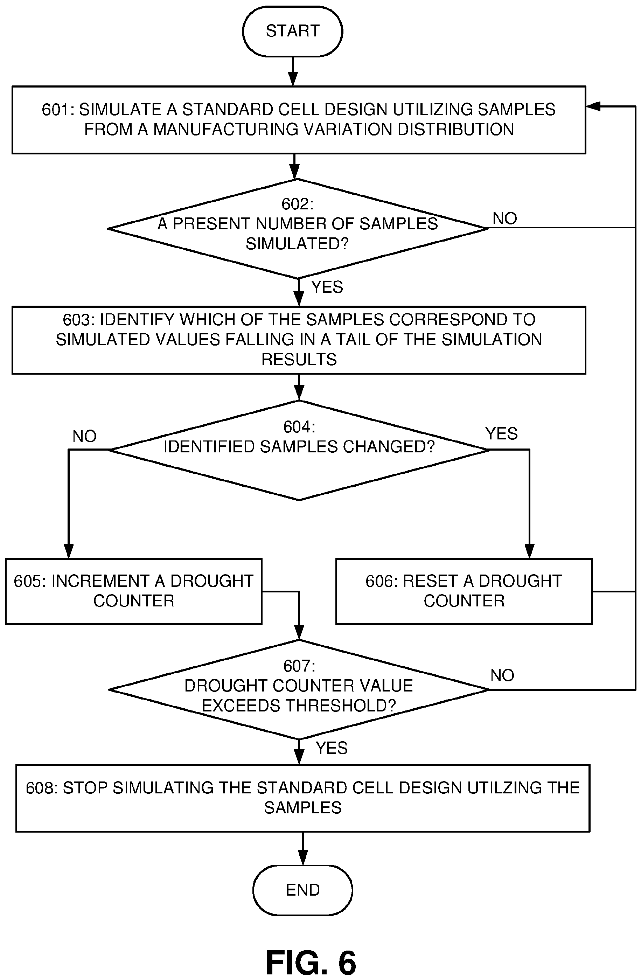

The variation determination system 330 can correlate the simulation results 341 to the ordered samples 305 utilized by the analog simulation system 340 used to generate the simulation results and, in a block 406 of Figure 4, determine whether to stop simulating the ordered samples 305. In some embodiments, the variation determination system 330 can determine whether a set of the worst of the ordered samples 305, for example, samples associated with simulation results 341 falling outside of +/- 3 sigma deviation, have already been simulated and decide whether to stop simulating more of the ordered samples 305 based on the determination. Embodiments of stopping simulation the surrogate model 304 with the ordered samples 305 will be described below in greater detail with reference to Figures 5 and 6.

When, in the block 406, the variation determination system 330 determines to not stop simulating, execution returns to the block 405, where the variation determination system 330 can continue simulating the surrogate model 304 with the ordered samples 305 of manufacturing variation and continue to receive corresponding simulation results 341. When, in the block 406, the variation determination system 330 determines to stop simulating, execution proceeds to a block 407 in Figure 7, where the variation determination system 330 can determine a variance measurement for the standard cell design based on the simulation results 341 using the ordered samples, which the variation determination system 330 can output as a variability characterization 306. In some embodiments, the variation determination system 330 can utilize the simulation results 341 corresponding to the worst simulated samples, such as those falling outside of +/- 3 sigma range, to determine the variability characterization 306 for the circuit design 301. The variation determination system 330 can specify the variability characterization 306 in a Liberty Variability Format (LVF), which can be an extension of a characterized circuit design 301 specified in a Liberty format.

Figure 5 illustrates a flowchart showing an example confidence interval stopping condition while characterizing manufacturing variability using truncated ordered sample simulation according to various examples. Referring to Figure 5, in a block 501, a computing system implementing an analog simulation tool can simulate a standard cell design utilizing samples from a manufacturing variation distribution. In some embodiments, the computing system implementing the analog simulation tool can simulate a surrogate model of the standard cell design utilizing samples from the manufacturing variation distribution. The analog simulation tool can set combinations of process variables for the standard cell design or the surrogate model to correspond to the samples of the manufacturing variation distribution, and generate simulation results that correspond to the operation of the standard cell design or the surrogate model having been configured according to the samples of the manufacturing variation distribution.

In a block 502, the computing system implementing a design characterization tool can determine whether a preset number of samples have been simulated. When the preset number of samples has not been simulated, execution returns to the block 501, where the analog simulation tool continues to simulate the standard cell design or the surrogate model with the samples.

When the preset number of samples has been simulated, execution can proceed to the block 503, where the computing system implementing the design characterization tool can identify which of the samples correspond to extreme simulated values. In some embodiments, the design characterization tool can identify a preset number of the samples having simulation results at a tail of a distribution of the simulation results. For example, when attempting to obtain a +/- 3 sigma deviation in 2000 samples, the 4 samples having the simulation results at the tail of the distribution of the simulation results can be the samples having the extreme simulated values.

In a block 504, the computing system implementing the design characterization tool can estimate an upper boundary of simulation values for the samples remaining to be simulated. In some embodiments, the design characterization tool can estimate the upper boundary for simulation values of the remaining samples by identifying a sample window corresponding to at least a subset of the previously simulated samples. The design characterization tool can identify the simulation results corresponding to the samples in the sample window and calculate a median of the simulation results. The design characterization tool can identify a sample in the middle of the sample window and determine the simulation result associated with the middle sample in the sample window. The design characterization tool can determine a difference between the median value of the simulation results in the sample window and the simulation value of the middle sample, called a maximum difference. When previous sample windows have been considered by the design characterization tool, the design characterization tool can identify the maximum difference as the largest determined difference between the median and middle simulation values for all of those sample windows.

The design characterization tool can also determine a simulation value corresponding to a start of an upper quartile of the sample window. The design characterization tool can combine the simulation value corresponding to the upper quartile with the maximum difference to obtain the estimate of the upper boundary of simulation values for the samples remaining to be simulated.

In a block 505, the computing system implementing the design characterization tool can determine whether the extreme simulated values exceed the estimate of the upper boundary. For example, when attempting to obtain a +/- 3 sigma deviation in 2000 samples, the simulation value corresponding to the 4^{th} most extreme sample can be compared with the upper boundary to determine which one is greater. When the extreme simulation results do not exceed the estimate of the upper boundary, execution can return to the block 501, where the computing system implementing the design characterization tool can simulate a standard cell design utilizing additional samples.

When the extreme simulation results exceed the estimate of the upper boundary, execution can proceed to the block 506, the computing system implementing the design characterization tool can stop simulating the standard cell design or the surrogate model of the standard cell design utilizing the samples. Since the samples have been ordered in an attempt to identify the worst simulation results early in the analog simulation of the samples, the value of the upper boundary relative to the values of the extreme samples can be utilized by the design characterization tool to determine when additional simulation of the standard cell design or the surrogate model of the standard cell design will not generate a simulation result that supplants the identified samples in the block 503. By ceasing the analog simulation of the standard cell design or the surrogate model of the standard cell design early, for example, before all of the samples have been simulated, the design characterization tool can reduce overall simulation time and consumption of processing resources. For example, when attempting to obtain a +/- 3 sigma deviation in 2000 samples, the design characterization tool may be able to stop simulating after 200 or so samples, providing an order of magnitude reduction in overall simulation time without jeopardizing an accuracy of the +/- 3 sigma deviation determination.

Figure 6 illustrates a flowchart showing an example drought stopping condition while characterizing manufacturing variability using truncated ordered sample simulation according to various examples. Referring to Figure 6, in a block 601, a computing system implementing an analog simulation tool can simulate a standard cell design or utilizing samples from a manufacturing variation distribution. In some embodiments, the computing system implementing the analog simulation tool can simulate a surrogate model of the standard cell design utilizing samples from the manufacturing variation distribution. The analog simulation tool can set combinations of process variables for the standard cell design or the surrogate model to correspond to the samples of the manufacturing variation distribution, and generate simulation results that correspond to the operation of the standard cell design or the surrogate model having been configured according to the samples of the manufacturing variation distribution.

In a block 602, the computing system implementing the design characterization tool can determine whether a preset number of samples have been simulated. When the preset number of samples has not been simulated, execution returns to the block 601, where the analog simulation tool continues to simulate the standard cell design or the surrogate model with the samples.

When the preset number of samples has been simulated, execution can proceed to the block 603, the computing system implementing the design characterization tool can identify which of the samples correspond to simulated values falling in a tail of the simulation results. For example, when attempting to obtain a variability characterization of +/- 3 sigma deviation in 2000 samples, the computing system implementing the design characterization tool can identify which of the simulation results fall in a +/- 2 sigma deviation, which can correspond to the 46 samples having the most extreme simulation results.

In a block 604, the computing system implementing the design characterization tool can determine whether the identified samples have changed, for example, compared to a previous identification of the samples. When the identified samples have changed, execution can proceed to a block 606, where the computing system implementing the design characterization tool can reset a drought counter. The drought counter can store a number corresponding to a number of samples that have been simulated without causing the identified tail samples to change. Execution can then return to the block 601, where the computing system implementing the design characterization tool can simulate a standard cell design utilizing additional samples.

When the identified samples have not changed, execution can proceed to a block 605, where the computing system implementing the design characterization tool can increment a drought counter. The incrementing of the drought counter can indicate that the most recent simulation using one of the samples did not generate a change to the identified tail samples.

In a block 607, the computing system implementing the design characterization tool can determine whether the drought counter value exceeds a threshold value. The drought counter value can correspond to a number of simulations of the standard cell design or corresponding surrogate model with different samples that have occurred since the last change in the tail samples was identified. When the drought counter value does not exceed the threshold, execution can return to the block 601, where the computing system implementing the design characterization tool can simulate a standard cell design utilizing additional samples.

When the drought counter value exceeds the threshold, execution can proceed to the block 608, the computing system implementing the design characterization tool can stop simulating the standard cell design utilizing the samples. By stopping the analog simulation of the standard cell design or corresponding surrogate model after there has been no change in an extreme group of simulation results, such as those simulation results falling in the +/- 2 sigma tail of the result distribution, the design characterization tool can determine when additional simulation of the standard cell design or the surrogate model of the standard cell design will not generate a simulation result that supplants an even more extreme group of simulation results, such as those simulation results falling in the +/- 3 sigma tail of the result distribution. By ceasing the analog simulation of the standard cell design or the surrogate model of the standard cell design early, for example, before all of the samples have been simulated, the design characterization tool can reduce overall simulation time and consumption of processing resources. For example, when attempting to obtain a +/- 3 sigma deviation in 2000 samples, the design characterization tool may be able to stop simulating after 200 or so samples, providing an order of magnitude reduction in overall simulation time without jeopardizing an accuracy of the +/- 3 sigma deviation determination. Further, the stopping conditions described with reference to Figures 5 and 6 can be combined or used together to determine when to stop simulating the standard cell design or the surrogate model with ordered samples.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures.

The processing device may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The processor memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

### Conclusion

While the application describes specific examples of carrying out embodiments of the invention, those skilled in the art will appreciate that there are numerous variations and permutations of the above described systems and techniques that fall within the scope of the invention as set forth in the appended claims. For example, while specific terminology has been employed above to refer to design processes, it should be appreciated that various examples of the invention may be implemented using any desired combination of electronic design automation processes.

One of skill in the art will also recognize that the concepts taught herein can be tailored to a particular application in many other ways. In particular, those skilled in the art will recognize that the illustrated examples are but one of many alternative implementations that will become apparent upon reading this disclosure.

Although the specification may refer to "an", "one", "another", or "some" example(s) in several locations, this does not necessarily mean that each such reference is to the same example(s), or that the feature only applies to a single example.

## Claims

1. A method comprising:
sampling, by a computing system, a distribution of values describing manufacturing variation for an integrated circuit described by a circuit design;
simulating (501; 601), by an analog simulation system (340) of the computing system, the circuit design utilizing the samples of the distribution of the values;
determining, by the computing system, when to stop the simulations of the circuit design prior to all of the samples from the distribution having been utilized in the simulations,
wherein determining when to stop the simulations of the circuit design further comprises estimating (504) an upper boundary for simulation values for the samples that are remaining to be simulated, and stopping (506) the simulations of the circuit design when the results of the simulations for a current set of the samples exceeds the estimated upper boundary for the simulation values for the samples that are remaining to be simulated; or
wherein determining when to stop the simulations of the circuit design comprises identifying (603), after each simulation of the circuit design, which of the samples have corresponding simulation values falling in a tail of the simulation results, and stopping (608) the simulations after a predetermined number of the simulations having occurred without changing the identification of which of the samples have corresponding simulation values falling in a tail of the simulation results; and
utilizing, by the computing system, results of the simulations to characterize operational variation of the circuit design to the manufacturing variation described in the distribution of the values.

2. The method of claim 1, further comprising generating, by the computing system, a surrogate model of the circuit design by simulating the circuit design with a set of training samples, wherein simulating the circuit design includes simulating the surrogate model of the circuit design utilizing the samples of the distribution of the values.

3. The method of claim 1, further comprising performing a static timing analysis of the circuit design utilizing the characterization of the operational variation of the circuit design.

4. The method of claim 1, wherein the distribution of values includes a probability distribution for occurrences of parameter values during a manufacturing process for the integrated circuit described by the circuit design.

5. A system comprising:
a memory system (107) configured to store computer-executable instructions; and
a computing system (105), in response to execution of the computer-executable instructions, is configured to:
sample a distribution of values describing manufacturing variation for an integrated circuit described by a circuit design;
simulate, by an analog simulation system (340) of the computing system, the circuit design utilizing the samples of the distribution of the values;
determine when to stop the simulations of the circuit design prior to all of the samples from the distribution having been utilized in the simulations, by:
estimating an upper boundary for simulation values for the samples that are remaining to be simulated, and stopping the simulations of the circuit design when the results of the simulations for a current set of the samples exceeds the estimated upper boundary for the simulation values for the samples that are remaining to be simulated, or
identifying, after each simulation of the circuit design, which of the samples have corresponding simulation values falling in a tail of the simulation results, and stopping the simulations after a predetermined number of the simulations having occurred without changing the identification of which of the samples have corresponding simulation values falling in a tail of the simulation results; and
utilize results of the simulations to characterize operational variation of the circuit design to the manufacturing variation described in the distribution of the values.

6. The system of claim 5, wherein the computing system, in response to execution of the computer-executable instructions, is further configured to:
generate a surrogate model of the circuit design by simulating the circuit design with a set of training samples; and
simulate the surrogate model of the circuit design utilizing the samples of the distribution of the values.

7. The system of claim 5, wherein the computing system, in response to execution of the computer-executable instructions, is further configured to perform a static timing analysis of the circuit design utilizing the characterization of the operational variation of the circuit design.

8. An apparatus comprising at least one computer-readable memory device storing instructions configured to cause one or more processing devices to perform operations comprising:
sampling, by a computing system, a distribution of values describing manufacturing variation for an integrated circuit described by a circuit design;
simulating, by an analog simulation system (340) of the computing system, the circuit design utilizing the samples of the distribution of the values;
determining, by the computing system, when to stop the simulations of the circuit design prior to all of the samples from the distribution having been utilized in the simulations,
wherein determining when to stop the simulations of the circuit design further comprises:
estimating an upper boundary for simulation values for the samples that are remaining to be simulated, and stopping the simulations of the circuit design when the results of the simulations for a current set of the samples exceeds the estimated upper boundary for the simulation values for the samples that are remaining to be simulated, or
identifying, after each simulation of the circuit design, which of the samples have corresponding simulation values falling in a tail of the simulation results, and stopping the simulations after a predetermined number of the simulations having occurred without changing the identification of which of the samples have corresponding simulation values falling in a tail of the simulation results; and
utilizing, by the computing system, results of the simulations to characterize operational variation of the circuit design to the manufacturing variation described in the distribution of the values.

9. The apparatus of claim 8, wherein the instructions are configured to cause one or more processing devices to perform operations further comprising generating a surrogate model of the circuit design by simulating the circuit design with a set of training samples, wherein simulating the circuit design includes simulating the surrogate model of the circuit design utilizing the samples of the distribution of the values.

10. The apparatus of claim 8, wherein the instructions are configured to cause one or more processing devices to perform operations further comprising performing a static timing analysis of the circuit design utilizing the characterization of the operational variation of the circuit design.

11. The apparatus of claim 8, wherein the distribution of values includes a probability distribution for occurrences of parameter values during a manufacturing process for the integrated circuit described by the circuit design.

## Patentansprüche

1. Verfahren, das Folgendes umfasst:
Probenahme, durch ein Rechensystem, einer Verteilung von Werten, die eine Herstellungsvariation für eine integrierte Schaltung beschreiben, die durch ein Schaltungsdesign beschrieben ist;
Simulieren (501; 601), durch ein analoges Simulationssystem (340) des Rechensystems, des Schaltungsdesigns unter Verwendung der Proben der Verteilung der Werte;
Bestimmen, durch das Rechensystem, wann die Simulationen des Schaltungsdesigns gestoppt werden sollen, bevor alle Proben aus der Verteilung in den Simulationen verwendet wurden,
wobei das Bestimmen, wann die Simulationen des Schaltungsdesigns gestoppt werden sollen, ferner das Schätzen (504) einer oberen Grenze für Simulationswerte für die Proben, die noch zu simulieren sind, und das Stoppen (506) der Simulationen des Schaltungsdesigns umfasst, wenn die Ergebnisse der Simulationen für einen aktuellen Satz der Proben die geschätzte obere Grenze für die Simulationswerte für die Proben, die noch zu simulieren sind, überschreiten; oder
wobei das Bestimmen, wann die Simulationen des Schaltungsdesigns gestoppt werden sollen, das Identifizieren (603), nach jeder Simulation des Schaltungsdesigns, welche der Proben entsprechende Simulationswerte aufweisen, die in einen Schwanz der Simulationsergebnisse fallen, und das Stoppen (608) der Simulationen umfasst, nachdem eine vorbestimmte Anzahl der Simulationen aufgetreten ist, ohne die Identifikation zu ändern, welche der Proben entsprechende Simulationswerte aufweisen, die in einen Schwanz der Simulationsergebnisse fallen; und
Nutzen, durch das Rechensystem, von Ergebnissen der Simulationen, um eine Betriebsvariation des Schaltungsdesigns zu der Herstellungsvariation zu charakterisieren, die in der Verteilung der Werte beschrieben ist.

2. Verfahren nach Anspruch 1, ferner umfassend das Erzeugen, durch das Rechensystem, eines Ersatzmodells des Schaltungsdesigns durch Simulieren des Schaltungsdesigns mit einem Satz von Trainingsproben, wobei das Simulieren des Schaltungsdesigns das Simulieren des Ersatzmodells des Schaltungsdesigns unter Verwendung der Proben der Verteilung der Werte beinhaltet.

3. Verfahren nach Anspruch 1, das ferner das Durchführen einer statischen Timing-Analyse des Schaltungsdesigns unter Verwendung der Charakterisierung der Betriebsvariation des Schaltungsdesigns umfasst.

4. Verfahren nach Anspruch 1, wobei die Verteilung von Werten eine Wahrscheinlichkeitsverteilung für das Auftreten von Parameterwerten während eines Herstellungsprozesses für die integrierte Schaltung beinhaltet, die durch das Schaltungsdesign beschrieben wird.

5. System, das Folgendes umfasst:
ein Speichersystem (107), das dazu ausgelegt ist, computerausführbare Anweisungen zu speichern; und
ein Rechensystem (105), das als Reaktion auf die Ausführung der computerausführbaren Anweisungen für Folgendes ausgebildet ist:
Probenahme einer Verteilung von Werten, die eine Herstellungsvariation für eine integrierte Schaltung beschreiben, die durch ein Schaltungsdesign beschrieben ist;
Simulieren, durch ein analoges Simulationssystem (340) des Rechensystems, des Schaltungsdesigns unter Verwendung der Proben der Verteilung der Werte;
Bestimmen, wann die Simulationen des Schaltungsdesigns gestoppt werden sollen, bevor alle Proben aus der Verteilung in den Simulationen verwendet wurden, durch:
Schätzen einer oberen Grenze für Simulationswerte für die Proben, die noch zu simulieren sind, und Stoppen der Simulationen des Schaltungsdesigns, wenn die Ergebnisse der Simulationen für einen aktuellen Satz der Proben die geschätzte obere Grenze für die Simulationswerte für die Proben, die noch zu simulieren sind, überschreiten, oder
Identifizieren, nach jeder Simulation des Schaltungsdesigns, welche der Proben entsprechende Simulationswerte aufweisen, die in einen Schwanz der Simulationsergebnisse fallen, und Stoppen der Simulationen, nachdem eine vorbestimmte Anzahl der Simulationen aufgetreten ist, ohne die Identifikation zu ändern, welche der Proben entsprechende Simulationswerte aufweisen, die in einen Schwanz der Simulationsergebnisse fallen; und
Nutzen von Ergebnissen der Simulationen, um eine Betriebsvariation des Schaltungsdesigns mit der Herstellungsvariation zu charakterisieren, die in der Verteilung der Werte beschrieben ist.

6. System nach Anspruch 5, wobei das Rechensystem als Reaktion auf die Ausführung der computerausführbaren Anweisungen ferner für Folgendes ausgebildet ist:
Erzeugen eines Ersatzmodells des Schaltungsdesigns durch Simulieren des Schaltungsdesigns mit einem Satz von Trainingsproben; und
Simulieren des Ersatzmodells des Schaltungsdesigns unter Verwendung der Proben der Verteilung der Werte.

7. System nach Anspruch 5, wobei das Rechensystem als Reaktion auf die Ausführung der computerausführbaren Anweisungen ferner dazu ausgebildet ist, eine statische Timing-Analyse des Schaltungsdesigns unter Verwendung der Charakterisierung der Betriebsvariation des Schaltungsdesigns durchzuführen.

8. Vorrichtung, die mindestens eine computerlesbare Speichervorrichtung umfasst, die Anweisungen speichert, die dafür ausgebildet sind, eine oder mehrere Verarbeitungsvorrichtungen zu veranlassen, Operationen durchzuführen, die Folgendes umfassen:
Probenahme, durch ein Rechensystem, einer Verteilung von Werten, die eine Herstellungsvariation für eine integrierte Schaltung beschreiben, die durch ein Schaltungsdesign beschrieben ist;
Simulieren, durch ein analoges Simulationssystem (340) des Rechensystems, des Schaltungsdesigns unter Verwendung der Proben der Verteilung der Werte;
Bestimmen, durch das Rechensystem, wann die Simulationen des Schaltungsdesigns gestoppt werden sollen, bevor alle Proben aus der Verteilung in den Simulationen verwendet wurden,
wobei das Bestimmen, wann die Simulationen des Schaltungsdesigns gestoppt werden sollen, ferner Folgendes umfasst:
Schätzen einer oberen Grenze für Simulationswerte für die Proben, die noch zu simulieren sind, und Stoppen der Simulationen des Schaltungsdesigns, wenn die Ergebnisse der Simulationen für einen aktuellen Satz der Proben die geschätzte obere Grenze für die Simulationswerte für die Proben, die noch zu simulieren sind, überschreiten, oder
Identifizieren, nach jeder Simulation des Schaltungsdesigns, welche der Proben entsprechende Simulationswerte aufweisen, die in einen Schwanz der Simulationsergebnisse fallen, und Stoppen der Simulationen, nachdem eine vorbestimmte Anzahl der Simulationen aufgetreten ist, ohne die Identifikation zu ändern, welche der Proben entsprechende Simulationswerte aufweisen, die in einen Schwanz der Simulationsergebnisse fallen; und
Nutzen, durch das Rechensystem, von Ergebnissen der Simulationen, um eine Betriebsvariation des Schaltungsdesigns zu der Herstellungsvariation zu charakterisieren, die in der Verteilung der Werte beschrieben ist.

9. Vorrichtung nach Anspruch 8, wobei die Anweisungen so ausgebildet sind, dass sie eine oder mehrere Verarbeitungsvorrichtungen veranlassen, Operationen durchzuführen, die ferner das Erzeugen eines Ersatzmodells des Schaltungsdesigns durch Simulieren des Schaltungsdesigns mit einem Satz von Trainingsproben umfassen, wobei das Simulieren des Schaltungsdesigns das Simulieren des Ersatzmodells des Schaltungsdesigns unter Verwendung der Proben der Verteilung der Werte einschließt.

10. Vorrichtung nach Anspruch 8, wobei die Anweisungen dazu ausgelegt sind, zu bewirken, dass eine oder mehrere Verarbeitungsvorrichtungen Operationen durchführen, die ferner das Durchführen einer statischen Timing-Analyse des Schaltungsdesigns unter Verwendung der Charakterisierung der Betriebsvariation des Schaltungsdesigns umfassen.

11. Vorrichtung nach Anspruch 8, wobei die Verteilung von Werten eine Wahrscheinlichkeitsverteilung für das Auftreten von Parameterwerten während eines Herstellungsprozesses für die integrierte Schaltung beinhaltet, die durch das Schaltungsdesign beschrieben wird.

## Revendications

1. Procédé comprenant les étapes suivantes :
échantillonner, par un système informatique, une distribution de valeurs décrivant une variation de fabrication d'un circuit intégré décrit par une conception du circuit ;
simuler (501 ; 601), par un système de simulation analogique (340) du système informatique, la conception du circuit en utilisant les échantillons de la distribution des valeurs ;
déterminer, par le système informatique, quand arrêter les simulations de la conception du circuit avant que tous les échantillons de la distribution aient été utilisés dans les simulations,
où la détermination du moment auquel il convient d'arrêter les simulations de la conception du circuit comprend en outre l'estimation (504) d'une limite supérieure pour les valeurs de simulation pour les échantillons qui restent à simuler, et l'arrêt (506) des simulations de la conception du circuit lorsque les résultats des simulations pour un ensemble courant d'échantillons dépassent la limite supérieure estimée pour les valeurs de simulation pour les échantillons qui restent à simuler ; ou
où la détermination du moment auquel il convient d'arrêter les simulations de la conception du circuit comprend d'identifier (603), après chaque simulation de la conception du circuit, lesquels des échantillons ont les valeurs de simulation correspondantes tombant dans une queue des résultats de simulation, et d'arrêter (608) les simulations après un nombre prédéterminé de simulations ayant eu lieu sans modifier l'identification des échantillons dont les valeurs de simulation correspondantes tombent dans une queue des résultats de simulation ; et
utiliser, par le système informatique, les résultats des simulations pour caractériser la variation opérationnelle de la conception du circuit par rapport à la variation de fabrication décrite dans la distribution des valeurs.

2. Procédé selon la revendication 1, comprenant en outre de générer, par le système informatique, un modèle de substitution de la conception du circuit en simulant la conception du circuit avec un ensemble d'échantillons d'apprentissage, où la simulation de la conception du circuit comprend la simulation du modèle de substitution de la conception du circuit en utilisant les échantillons de la distribution des valeurs.

3. Procédé selon la revendication 1, comprenant en outre d'exécuter une analyse de synchronisation statique de la conception du circuit utilisant la caractérisation de la variation opérationnelle de la conception du circuit.

4. Procédé selon la revendication 1, dans lequel la distribution des valeurs comprend une distribution de probabilité pour les occurrences de valeurs de paramètres au cours d'un processus de fabrication du circuit intégré décrit par la conception du circuit.

5. Système comprenant :
un système de mémoire (107) configuré pour stocker des instructions exécutables par ordinateur ; et
un système informatique (105), en réponse à l'exécution des instructions exécutables par ordinateur, configuré pour :
échantillonner une distribution de valeurs décrivant une variation de fabrication d'un circuit intégré décrit par une conception du circuit ;
simuler, par un système de simulation analogique (340) du système informatique, la conception du circuit en utilisant les échantillons de la distribution des valeurs ;
déterminer quand arrêter les simulations de la conception du circuit avant que tous les échantillons de la distribution aient été utilisés dans les simulations :
en estimant une limite supérieure pour les valeurs de simulation pour les échantillons qui restent à simuler, et en arrêtant les simulations de la conception du circuit lorsque les résultats des simulations pour un ensemble courant d'échantillons dépassent la limite supérieure estimée pour les valeurs de simulation pour les échantillons qui restent à simuler, ou
en identifiant, après chaque simulation de la conception du circuit, lesquels des échantillons ont les valeurs de simulation correspondantes tombant dans une queue des résultats de simulation, et en arrêtant les simulations après un nombre prédéterminé de simulations ayant eu lieu sans modifier l'identification des échantillons dont les valeurs de simulation correspondantes tombent dans une queue des résultats de simulation ; et
utiliser les résultats des simulations pour caractériser la variation opérationnelle de la conception du circuit par rapport à la variation de fabrication décrite dans la distribution des valeurs.

6. Système selon la revendication 5, dans lequel le système informatique, en réponse à l'exécution des instructions exécutables par ordinateur, est en outre configuré pour :
générer un modèle de substitution de la conception du circuit en simulant la conception du circuit avec un ensemble d'échantillons d'apprentissage ; et
simuler le modèle de substitution de la conception du circuit en utilisant les échantillons de la distribution des valeurs.

7. Système selon la revendication 5, dans lequel le système informatique, en réponse à l'exécution des instructions exécutables par ordinateur, est en outre configuré pour effectuer une analyse de synchronisation statique de la conception du circuit en utilisant la caractérisation de la variation opérationnelle de la conception du circuit.

8. Appareil comprenant au moins un dispositif de mémoire lisible par ordinateur stockant des instructions configurées pour amener un ou plusieurs dispositifs de traitement à réaliser des opérations comprenant les étapes suivantes :
échantillonner, par un système informatique, une distribution de valeurs décrivant une variation de fabrication d'un circuit intégré décrit par une conception du circuit ;
simuler, par un système de simulation analogique (340) du système informatique, la conception de circuit en utilisant les échantillons de la distribution des valeurs ;
déterminer, par le système informatique, quand arrêter les simulations de la conception du circuit avant que tous les échantillons de la distribution aient été utilisés dans les simulations,
où la détermination du moment où il convient arrêter les simulations de la conception du circuit comprend en outre les étapes suivantes :
estimer une limite supérieure pour les valeurs de simulation pour les échantillons qui restent à simuler, et arrêter les simulations de la conception du circuit lorsque les résultats des simulations pour un ensemble courant d'échantillons dépassent la limite supérieure estimée pour les valeurs de simulation pour les échantillons qui restent à simuler, ou
identifier, après chaque simulation de la conception du circuit, lesquels des échantillons ont les valeurs de simulation correspondantes tombant dans une queue des résultats de simulation, et arrêter les simulations après un nombre prédéterminé de simulations ayant eu lieu sans modifier l'identification des échantillons dont les valeurs de simulation correspondantes tombent dans une queue des résultats de simulation ; et
utiliser, par le système informatique, les résultats des simulations pour caractériser la variation opérationnelle de la conception du circuit par rapport à la variation de fabrication décrite dans la distribution des valeurs.

9. Appareil selon la revendication 8, dans lequel les instructions sont configurées pour amener un ou plusieurs dispositifs de traitement à réaliser des opérations comprenant en outre de générer un modèle de substitution de la conception du circuit en simulant la conception du circuit avec un ensemble d'échantillons d'apprentissage, où la simulation de la conception du circuit comprend la simulation du modèle de substitution de la conception du circuit en utilisant les échantillons de la distribution des valeurs.

10. Appareil selon la revendication 8, dans lequel les instructions sont configurées pour amener un ou plusieurs dispositifs de traitement à réaliser des opérations comprenant en outre de réaliser une analyse de synchronisation statique de la conception du circuit utilisant la caractérisation de la variation opérationnelle de la conception du circuit.

11. Appareil selon la revendication 8, dans lequel la distribution des valeurs comprend une distribution de probabilité pour les occurrences des valeurs de paramètres au cours d'un processus de fabrication du circuit intégré décrit par la conception du circuit.
